# EUROPEAN PATENT SPECIFICATION

(11) **EP 0 716 540 B1**
(45) Date of publication and mention of the grant of the patent: **22.09.1999**
(21) Application number: 95119167.5
(22) Date of filing: 06.12.1995
(51) Int. Cl.: H04N 5/16, H04N 11/16, H04N 9/87, H04N 9/83

(54) **Direct current offset compensation circuit for pal plus television**
Schaltung zum Kompensieren eines Gleichstrom-Offsets für Pal-Plus Fernsehen
Circuit de compensation du décalage de la composante continue pour la télévision pal-plus

(30) Priority: 07.12.1994 KR 3315694
(43) Date of publication of application: 12.06.1996
(73) Proprietor: LG ELECTRONICS INC., Seoul (KR)
(72) Inventor: Cho, Jin-Ho, Seoul (KR)
(74) Representative: Cohausz & Florack

(56) References cited:
- EP-A- 0 508 333
- EP-A- 0 567 304
- PATENT ABSTRACTS OF JAPAN vol. 94, no. 010 & JP-A-06 292146 (MATSUSHITA ELECTRIC IND CO LTD), 18 October 1994,
- PATENT ABSTRACTS OF JAPAN vol. 018, no. 455 (E-1595), 24 August 1994 & JP-A-06 141293 (TOSHIBA CORP), 20 May 1994,

## Description

### PREVENTION APPARATUS FOR TELEVISION

### BACKGROUND OF THE INVENTION

### 1. Field of the Invention

The present invention relates to a direct current offset compensation circuit for a PAL plus television, and in particular to an improved direct current offset compensation circuit for a PAL plus television capable of preventing a direct current distortion by compensating a direct current offset when demodulating the helper signal outputted from a PAL plus video cassette tape recorder (hereinafter called a "VCR").

### 2. Description of the Conventional Art

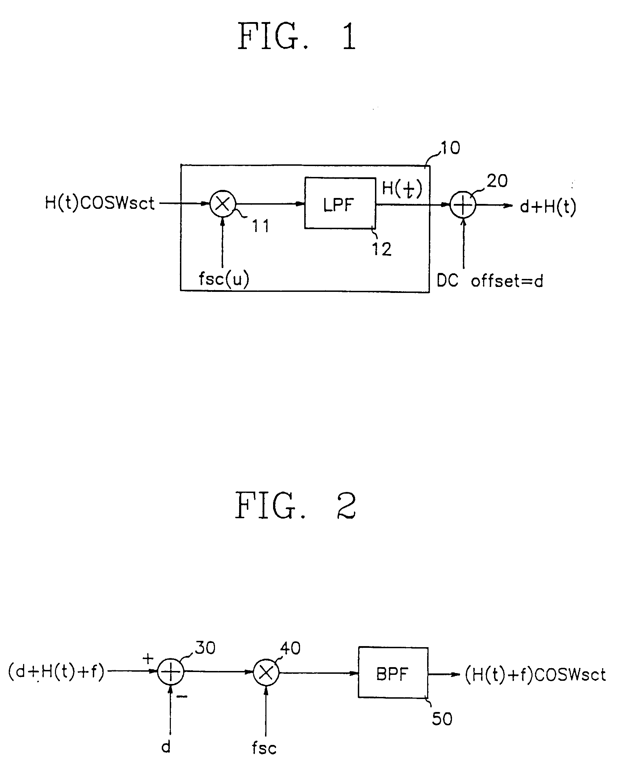

Fig. 1 shows a helper signal demodulation circuit for a conventional PAL plus VCR, which includes a demodulating unit 10 for demodulating a helper signal H[t]COSWsct to a certain frequency and for outputting a low-pass component from the thusly demodulated signal, and an adder 20 for adding a direct current offset voltage "d" to the output signal of the demodulating unit 10.

Fig. 2 shows a helper signal remodulating circuit of a conventional PAL plus VCR, which includes an adder for decreasing the level of the helper signal d+H[t]+f reproduced by VCR by a level of the offset voltage "d", a multiplier 40 for remodulating the output signal of the adder to a certain frequency Fsc, and a band-pass filter 50 for outputting a certain band-pass component of the output signal of the multiplier.

The operation of the direct current offset compensation circuit for a PAL plus television will now be explained with reference to the accompanying drawings.

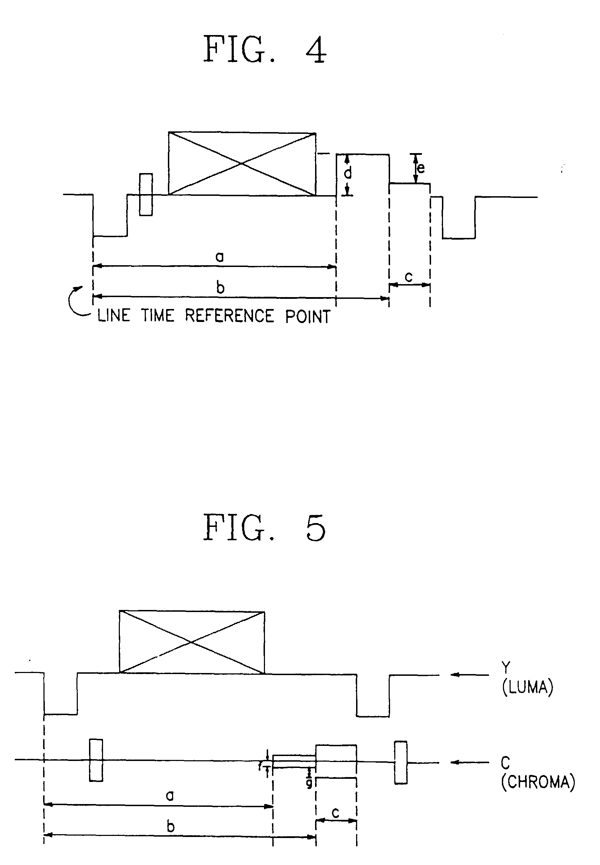

To begin with, a helper reference signal contained in a 23rd scanning line of a PAL plus signal includes a black level reference signal and a helper reference burst. When PAL VCR records the above-mentioned helper signal, the demodulating unit 10 and the adder 11 demodulate the helper signal H[t]COSWsct to a certain frequency, and the low-pass filter 12 outputs a certain low-pass component of the thusly demodulated signal. At this time, the adder 20 adds a direct current offset voltage "d" to the output signal H(t) of the demodulating unit 10, and a certain signal d+H[t] having a wave form as shown in fig. 4 is outputted. In Fig. 4, "a" denotes an interval from a scanning line time reference point to a black level reference signal, and "b" denotes an interval from a scanning line time reference point to a helper reference burst signal, and "c" denotes a helper reference burst duration, in which a helper reference burst is demodulated, and "e" denotes a level difference decreased by a predetermined level.

In addition, in order to reproduce a recorded helper signal, the adder 30 decreases the level of the reproduced helper signal d+H[t]+f by a level of the direct current offset voltage "d", and the multiplier 40 remodulates the signal to a certain frequency, and the band-pass filter 50 passes a certain band-pass component from the thusly remodulated signal, and outputs the remodulated helper signal H[t]+fCOSWsct. When the helper signal is filtered by a band-pass filter by remodulating to a certain frequency Fsc, a luminance signal Y and a color signal C are divided as shown in Fig. 5.

However, a direct current distortion "f" is contained in the black level reference signal as shown in Fig. 5 in the remodulated signal {(H[t]+f)COSWsct}. Therefore, since the direct current distortion "f" is a vertical high frequency in a PAL plus television, it becomes a factor which decreases the quality of picture resolution.

PATENT ABSTRACTS OF JAPAN vol. 94, no. 010 & JP-A-06 292146 (MATSUSHITA ELECTRIC IND CO LTD), 18 October 1994, discloses a circuit for applying error elimination processing to an additional information signal with an offset added thereto at a sender side in a "letter box" television broadcast system, in which: the DC level reference; a DC level of each scanning line including the helper signal; and a DC offset reference value are stored and passed to an adder/subtracter circuit which develops an output signal fed in turn to an error elimination circuit. The output of the error elimination circuit is subtracted from the input television signal.

### SUMMARY OF THE INVENTION

Accordingly, it is an object of the present invention to provide a direct current offset compensation circuit for a PAL plus television, which overcome the problems encountered in the conventional direct current offset compensation circuit for a PAL plus television.

It is another object of the present invention to provide an improved direct current offset compensation circuit for a PAL plus television capable of preventing a direct current distortion by compensating a direct current offset when demodulating the helper signal transmitted from a PAL plus video cassette tape recorder.

To achieve the above objects, there is provided a direct current offset compensation circuit for a PAL plus television, which includes a demodulating unit for demodulating a helper signal to a certain frequency and for low-pass-filtering the signal; a level detecting unit for delaying an output signal of the demodulating unit at a certain scanning line and for detecting a direct current distortion and a peak value of a helper signal using an output signal of the demodulating unit and the thusly delayed signal; an adder for subtracting the direct current distortion detected by the level detecting unit from an output signal of the demodulating unit and for removing the direct current distortion from the thusly demodulated helper signal; a level setting unit for dividing a desired peak value of the helper signal by the peak value detected by the level detecting unit; and a multiplier for multiplying the output signal of the adder and the output signal of the level setting unit and for adjusting the peak value of the desired helper signal to a certain level.

### BRIEF DESCRIPTION OF THE DRAWINGS

Fig. 1 is a block diagram of a helper signal demodulating unit for a conventional PAL VCR.

Fig. 2 is a block diagram of a helper signal remodulating unit for a conventional PAL VCR.

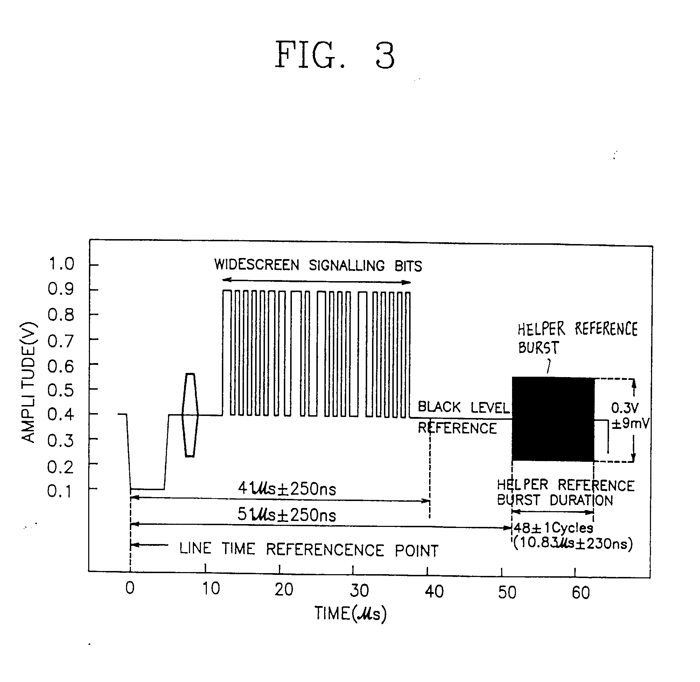

Fig. 3 is a wave form of a helper reference signal of a PAL plus signal of a conventional PAL LCR.

Fig. 4 is a wave form of a demodulated helper signal of Fig. 1.

Fig. 5 is a wave form of a remodulated helper signal of Fig. 2.

Fig. 6 is a block diagram of a direct current offset compensation circuit of a PAL plus television according to the present invention.

Fig. 7 is a block diagram of a level detecting unit of Fig. 6.

Fig. 8 is a wave form of a demodulation of a helper signal according to the present invention.

### DETAILED DESCRIPTION OF THE INVENTION

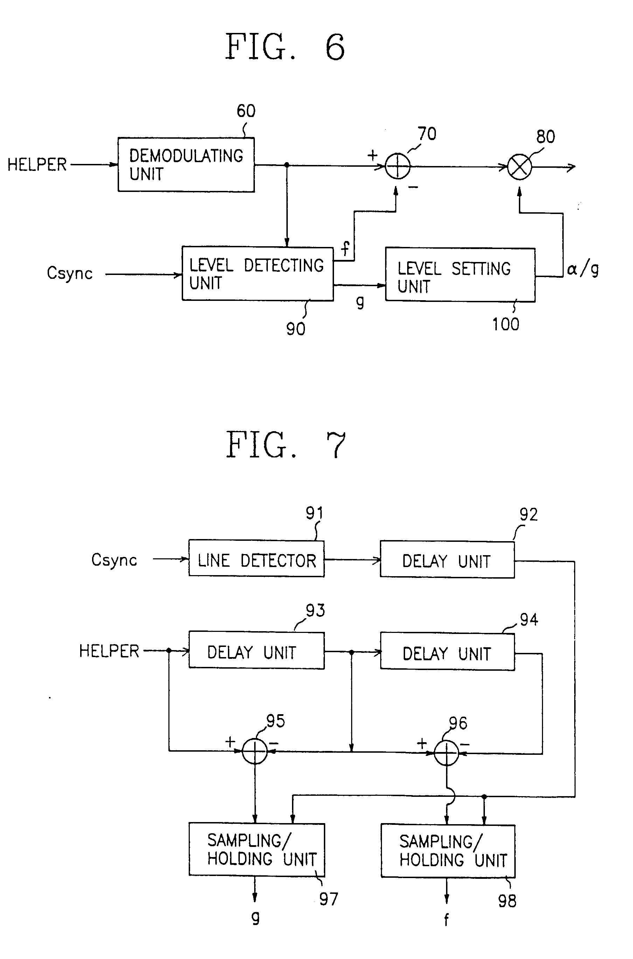

Fig. 6 shows a direct current offset compensation circuit for a PAL plus television according to the present invention, which includes a demodulating unit 60 for demodulating a helper signal, a level detecting unit 90 for detecting a direct current distortion "f" and a helper peak value "g" from the output signal of the demodulating unit 60 in accordance with a synchronous signal Csync of a combined video signal, an adder 70 for adding subtracting the output signal of the demodulating unit 60 by a direct current distortion "f" detected by the level detecting unit 90, a level setting unit 100 for dividing the final peak value "a" by a helper peak value "g" of the level detecting unit 90, and a multiplier 80 for multiplying the output signal "a/g" of the level setting unit 100 with the output signal of the adder 70 and for fixing the demodulated helper signal to have a desired output level.

The level detecting unit 90, as shown in Fig. 7, includes a line detector 91 for identifying a 23rd scanning line from a synchronous signal Csync of the combined video signal, a first delay unit 92 for delaying the output signal of the line detector 91 for a predetermined time, a second and third delay units 93 and 94 for delaying the demodulated helper signals for a predetermined time, respectively, a first adder 95 for subtracting the demodulated helper signal by the signal delayed by the second delay unit 93, a first sampling/holding unit 97 for sampling and holding the output signal of the first adder 95 in accordance with an output signal of the first delay unit 92, a second adder 96 for subtracting the output signal of the second delay unit 93 by the signal delayed by the third delay unit 94, and a second sampling/holding unit 98 for sampling and holding the output signal of the second adder 96 in accordance with an output signal of the first delay unit 92.

The operation and effects of the direct current offset compensation circuit for a PAL plus television according to the present invention will now be explained with reference to the accompanying drawings.

Fig. 4 shows a demodulation wave form of a helper reference signal of a PAL plus VCR, and Fig. 5 shows a remodulation wave form.

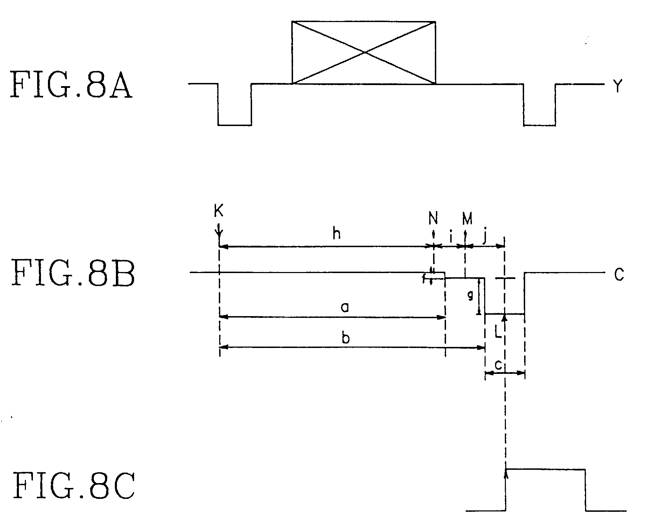

When a reproducing signal is inputted to a PAL plus VCR, a luminance signal as shown in Fig. 8A and a color signal as shown in Fig. 8B are demodulated. That is, a helper reference signal as shown in Fig. 5 is redemodulated, and as a result a wave form as shown in Fig. 8B is obtained. At this time, the level detecting unit 90 checks the output signal of the demodulating unit 60 in accordance with a synchronous signal Csync of the combined video signal and computes a level "f" of a direct current distortion and a peak value "g" of a helper signal from the wave form as shown in Fig. 8B.

Thereafter, the adder 70 subtracts the output signal of the demodulating unit 60 by a direct current distortion level "f" which is detected by the level detecting unit 90, and the direct current distortion is removed during a recording/reproducing.

In addition, when the level detecting unit 90 outputs a computed peak value, the level setting unit 100 adjusts a desired peak value. When assuming the desired peak value is as "a", a desired final peak value is divided by a computed peak value "g", and the result value "a/g" is outputted to the multiplier 80. Thereafter, the multiplier 80 multiplies the output signal of the adder 70 by the output signal "a/g" of the level setting unit 100, the peak value of the demodulated helper signal is fixed as "a". That is, the level of the helper signal is automatically adjusted in accordance with the output signal "a/g" of the level setting unit 100.

The operation of the level detecting unit 90 for removing the direct current distortion and for automatically adjusting the peak value will now be explained.

To begin with, when the line detector 91, which identifies a 23rd scanning line from the combined synchronous signal Csync identifies the 23rd scanning line at a point "k", the first delay unit 92 checks whether a certain time is lapsed from the time the 23rd scanning line is identified, and outputs a certain pulse when the certain time is lapsed. Here, the first delay unit 92 has a certain time which is obtained by adding the intervals "h", "i" and "j" in the wave form as shown in Fig. 8B.

In addition, as shown in Figs. 8A and 8B, the demodulated helper signal is outputted to the first adder 95 and the second adder 96, respectively, through the second and third delay units 93 and 94 in order. Here, the second delay unit 93 has a certain delay time as much as the intervals "h" and "i" in the wave form of Fig. 8B, and the third delay unit 94 has a certain delay time as much as the intervals "j" in the wave form of Fig. 8B.

At this time, in case that the helper signal demodulated at the time "L" of Fig. 8B is inputted to the second delay unit 93, the same value as at the time "M" and "N" of Fig. 8B is checked at the input/output terminal of the third delay unit 94. Therefore, since the first adder 95 subtracts the input/output value of the second delay unit 93, the first adder 95 has the same value as the peak value "g" of the helper signal. In addition, since the second adder 96 subtracts the input/output value of the third delay unit 94, the second adder 96 outputs the same value as the direct current distortion "f".

Meanwhile, the first delay unit 92 outputs a strobe pulse as shown in Fig. c to the first and second sampling/holding units 97 and 98 when a certain setting time is lapsed. Thereafter, the strobe pulse outputted from the first delay unit 92 is shifted from a low level to a high level, the first and second sampling/holding units 97 and 98 sample and hold the output signals "g" and "f" of the first and second adders 95 and 96. Since the helper reference signal is once inputted during one frame, the first and second sampling/holding units 97 and 98 holds the output signals "g" and "f" of the first and second adders 95 and 96 during one frame. These output signals "f" and "g" are inputted to the level setting unit 100, respectively, and are used as a signal for removing direct current distortions and automatically adjusting the peak level.

As described above, the direct current offset compensation circuit for a PAL plus television according to the present invention is directed to preventing a direct current distortion before processing the demodulated helper signal, so that it is possible to prevent the deterioration of picture resolution and to automatically adjust the level of a helper signal to a desired level by computing the peak value of a helper signal.

## Claims

1. A direct current offset compensation circuit for a PAL plus television, comprising:
demodulating means (60) for demodulating a helper signal to a certain frequency and for low-pass-filtering said demodulated signal;
level detecting means (90) for delaying an output signal of said demodulating means at a certain scanning line and for detecting and outputting a direct current distortion (f) and a peak value (g) of a helper signal using an output signal of the demodulating means and the thusly delayed signal;
adding means (70) for subtracting said direct current distortion (f) detected by said level detecting means from an output signal of the demodulating means and for removing the direct current distortion from the thusly demodulated helper signal;
level setting means (100) for dividing a desired peak value (a) of the helper signal by said peak value (g) detected by the level detecting means; and
multiplying means (80) for multiplying an output signal of said adding means and the output signal (a/g) of said level setting means and for adjusting a peak value of the desired helper signal to a certain level.

2. The circuit of claim 1, wherein said level detecting means includes:
a line detector for identifying a certain scanning line from a synchronous signal of a combined video signal;
a first delay unit, enabled in accordance with an output signal of said line detector, for generating a strobe signal when a certain time is lapsed;
second and third delay units for delaying the output signal of the demodulating means in order for a certain time;
a first adder for subtracting a signal delayed by said second delay unit from the output signal of the demodulating means;
a second adder for subtracting a signal delayed by said third delay unit from the output signal of the second delay unit;
a first sampling/holding unit for sampling and holding the output signal of the first adder in accordance with an input of the strobe pulse outputted from the first delay unit; and
a second sampling/holding unit for sampling and holding the output signal of the second adder in accordance with an input of the strobe pulse outputted from the first delay unit.

3. The circuit of claim 2, wherein said first delay unit is directed to outputting a strobe pulse at the time a certain scanning line is ended.

4. The circuit of claim 2, wherein said second delay unit is directed to delaying the helper signal until a black level reference signal is ended from a scanning line time reference point.

5. The circuit of claim 2, wherein said second delay unit is directed to delaying the helper signal during a helper reference burst duration.

## Patentansprüche

1. Gleichstrom-Offset-Kompensationsschaltung für ein PAL-Plus Fernsehen, umfassend:
ein Demodulationsmittel (60) zum Demodulieren eines Helfersignals auf eine bestimmte Frequenz und zum Tiefpaßfiltern des demodulierten Signals;
ein Pegelerkennungsmittel (90) zum Verzögern eines Ausgangssignals des Demodulationsmittels an einer bestimmten Abtastzeile und zum Erkennen und Ausgeben einer Gleichstromverzerrung (f) und eines Spitzenwertes (g) eines Helfersignals mit Hilfe eines Ausgangssignals des Demodulationsmittels und des solcherart verzögerten Signals;
ein Additionsmittel (70) zum Subtrahieren der Gleichstromverzerrung (f), die vom Pegelerkennungsmittel erkannt wurde, von einem Ausgangssignal des Demodulationsmittels und zum Entfernen der Gleichstromverzerrung vom solcherart demodulierten Helfersignal;
ein Pegeleinstellmittel (100) zum Teilen eines erwünschten Spitzenwertes (a) des Helfersignals durch den Spitzenwert (g), der vom Pegelerkennungsmittel erkannt wurde; und
ein Multiplikationsmittel (80) zum Multiplizieren eines Ausgangssignals des Additionsmittels mit dem Ausgangssignal (a/g) des Pegeleinstellmittels und zum Einstellen eines Spitzenwertes des gewünschten Helfersignals auf einen bestimmten Pegel.

2. Schaltung nach Anspruch 1, wobei das Pegelerkennungsmittel umfaßt:
einen Zeilendetektor zum Auffinden einer bestimmten Abtastzeile von einem Synchronsignal eines kombinierten Videosignals;
eine erste Verzögerungseinheit, die in Übereinstimmung mit einem Ausgangssignal des Zeilendetektors aktiviert wird, zur Erzeugung eines Strobe-Signals, wenn eine bestimmte Zeitspanne verstrichen ist;
eine zweite und eine dritte Verzögerungseinheit zum Verzögern des Ausgangssignals des Demodulationsmittels der Reihe nach für eine bestimmte Zeitdauer;
einen ersten Addierer zum Subtrahieren eines Signals, das von der zweiten Verzögerungseinheit verzögert wurde, vom Ausgangssignal des Demodulationsmittels;
einen zweiten Addierer zum Subtrahieren eines Signals, das von der dritten Verzögerungseinheit verzögert wurde, vom Ausgangssignal der zweiten Verzögerungseinheit;
eine erste Abtast-Halte-Einheit zum Abtasten und Halten des Ausgangssignals des ersten Addierers in Übereinstimmung mit einem Eingang des Strobe-Impulses, der von der ersten Verzögerungseinheit ausgegeben wurde;
und
eine zweite Abtast-Halte-Einheit zum Abtasten und Halten des Ausgangssignals des zweiten Addierers in Übereinstimmung mit einer Eingabe des Strobe-Impulses, der von der ersten Verzögerungseinheit ausgegeben wurde.

3. Schaltung nach Anspruch 2, wobei die erste Verzögerungseinheit dazu dient, den Strobe-Impuls auszugeben, wenn eine bestimmte Abtastzeile beendet ist.

4. Schaltung nach Anspruch 2, wobei die zweite Verzögerungseinheit dazu dient, das Helfersignal zu verzögern, bis ein Schwarzpegelreferenzsignal von einem Abtastzeilenzeitreferenzpunkt beendet wird.

5. Schaltung nach Anspruch 2, wobei die zweite Verzögerungseinheit dazu dient, das Helfersignal während einer Helferreferenzstoßdauer zu verzögern.

## Revendications

1. Circuit de compensation d'équilibrage de courant continu pour télévision PAL plus, comprenant:
un démodulateur (60) pour démoduler un signal auxiliaire à une certaine fréquence et filtrer ledit signal (1) en basse fréquence;
un détecteur de niveau (90) pour retarder un signal de sortie dudit démodulateur au niveau d'une ligne d'exploration déterminée et pour détecter et générer une déformation (f) du courant continu et une valeur de crête (9) d'un signal auxiliaire en utilisant un signal de sortie du démodulateur et le signal ainsi retardé;
un additionneur (70) pour retrancher la déformation (f) du courant continu détectée par le détecteur de niveau d'un signal de sortie du démodulateur, et pour éliminer la déformation du courant continu du signal auxiliaire ainsi démodulé;
un moyen de réglage du niveau (100) pour diviser une valeur de crête voulue (a) du signal auxiliaire par la valeur de crête (9) détectée par le détecteur de niveau; et
un multiplicateur (80) pour multiplier un signal de sortie dudit totalisateur et le signal de sortie (a/g) du détecteur de niveau et pour ajuster à un niveau déterminé une valeur de crête du signal auxiliaire voulu.

2. Circuit selon la revendication 1, dans lequel le détecteur de niveau comprend:
un détecteur de lignes pour identifier une ligne d'exploration déterminée à partir d'un signal synchrone d'un signal vidéo combiné;
un premier temporisateur enclenché en fonction d'un signal de sortie du détecteur de lignes, pour générer un signal de déclenchement lorsqu'un certain temps s'est écoulé;
un deuxième et un troisième temporisateur pour retarder le signal de sortie du démodulateur pendant un certain temps;
un premier additionneur pour soustraire un signal retardé par le deuxième temporisateur du signal de sortie du démodulateur;
un deuxième additionneur pour soustraire un signal retardé par le troisième temporisateur du signal de sortie du deuxième temporisateur;
un premier échantillonneur/conservateur pour échantillonner et conserver le signal de sortie du premier additionneur en fonction d'une entrée de l'impulsion de déclenchement sortant du premier temporisateur; et
un second échantillonneur/conservateur pour échantillonner et conserver le signal de sortie du deuxième additionneur en fonction d'une entrée de l'impulsion de déclenchement sortant du premier temporisateur.

3. Circuit selon la revendication 2, dans lequel le premier temporisateur est destiné à sortir une impulsion de déclenchement au moment où une ligne d'exploration déterminée se termine.

4. Circuit selon la revendication 2, dans lequel le deuxième temporisateur est destiné à retarder le signal auxiliaire jusqu'à ce qu'un signal de référence du niveau du noir se soit achevé, partant d'un point de référence temporel d'une ligne d'exploration.

5. Circuit selon la revendication 2, dans lequel le deuxième temporisateur est destiné à retarder le signal auxiliaire pendant une durée de chrominance de référence du signal auxiliaire.
